Europäisches Patentamt

European Patent Office

Office européen des brevets

(11) Publication number: **0 496 247 A1**

## EUROPEAN PATENT APPLICATION

(21) Application number: **92100472.7**

(22) Date of filing: **14.01.92**

(51) Int. Cl.5: **A47J 27/14**

(30) Priority: **23.01.91 IT 291**

(43) Date of publication of application:
**29.07.92 Bulletin 92/31**

(84) Designated Contracting States:
**DE DK ES FR GB IT SE**

(71) Applicant: **ZANUSSI GRANDI IMPIANTI S.p.A.**
**Viale Treviso 15**
**I-33170 Pordenone(IT)**

(72) Inventor: **Bolzicco, Giuseppe**
**via Rosaccio 8**
**I-33170 Pordenone(IT)**

(74) Representative: **Dalla Rosa, Adriano**
**PROPRIA Srl Via Mazzini 13**
**I-33170 Pordenone(IT)**

(54) Tilting device for food cooking pans, in particular braising pans and the like.

(57) Device for tilting the pan of cooking appliances such as braising pans or other similar food cooking vessels, said pan (6) being hinged in a tiltable way in a metal framework (10).

Device comprising a cylindrical shaft (13) provided with a threaded portion (15) engaging with a female-thread nut screw (17) fixedly mounted in said framework (10), and further comprising a bush (18) sliding freely on the shaft (13) and mechanically connected through two articulated levers (19, 20) with the pan (6). During the tilting movement of the pan (6), as generated by rotatably driving the shaft (13) either manually or by means of an electric motor (25), said pan is raised on the front side of the appliance through the action of the threaded shaft portion-nut screw system and the articulated levers (19, 20) which are displaced by the bush (18) as it slides along the shaft (13).

With this tilting device it is possible to quickly and conveniently gain access to the areas included between the support framework (10) and the cooking pan (6) in view of cleaning them from food spillages and incrustations, while the corresponding cooking appliances can be designed with a compact size for reduced encumbrance.

FIG.I

EP 0 496 247 A1

The invention relates to a device for tilting the vessel or the pan of food cooking appliances, in particular braising pans and the like, said device being made in such a way as to enable said vessels or pans to be conveniently and effectively tilted and, at the same time, to create the possibility of conveniently cleaning them.

Vessels of such food cooking appliances for professional kitchens as braising pans and the like are known, which essentially comprise a parallelepiped-shaped pan with a gas or electric heating arrangement located thereunder, capable of containing the food to be cooked and provided with a supporting shaft that is normally hinged on the central and side portion of a metal framework resting on the floor, said pan being displaceable by means of a worm gear driving mechanism engaging with corresponding mechanical members, usually located in a position underneath the pan, from a horizontal working position, in which the cooking of the food is performed, to an inclined tilting position, to which the pan is brought at the end of the cooking process in order to unload the food and let liquid food rests out of the pan into appropriate collecting containers through an outlet spout provided along the inclined front wall of the pan, such an inclined position being furthermore adapted to allow for said pan to be cleaned in view of a further use of the cooking vessel.

However, the vessels that are designed according to said criteria for enabling the pan to be adequately tilted in view of performing the afore cited tasks, have a main drawback in that they require full availability of the space underneath the pan, so that it is practically impossible to use said space for different duties or to different purposes. Furthermore, considerable difficulties are found in this particular case in connection with cleaning operations intended to remove incrustations formed by food remainders depositing in the zone where the pan is hinged on to the metal framework, since said zone is quite difficult to reach from the outside.

Cooking vessels are also known in which the pan is hinged with one of its lower ends on to a side portion of the metal framework, and is furthermore associated with a tilting mechanism of a traditional type which is housed inside said metal framework, in a position underneath the pan.

Furthermore, the arrangement of the pan tilting mechanism and the hinging position of the pan with respect to the metal support framework are such as to bring about a considerable reduction in the space which is freely available underneath the same pan, as it was the case in the afore mentioned instance, with a resulting practical impossibility to use said space for different duties, eg. as a storage compartment or cabinet.

It is the purpose of this invention to overcome all of the afore described drawbacks and limitations in use by providing a cooking vessel of the same type as described above, with a pan tilting device which is made in such a way as to be capable of bringing about an effective tilting of these vessels in view of their convenient cleaning.

Such an aim is reached in a tilting device having such constructive characteristics as essentially described with particular reference to the appended claim.

The invention will be further described by way of non-limiting example with reference to the accompanying drawings in which:
- Figure 1 is a schematic side view of a first embodiment of the tilting device of a cooking vessel according to the invention;
- Figure 2 is a view of an enlarged constructive detail of the tilting device shown in Figure 1;
- Figures 3 and 4 are a view of two further embodiments of the pan tilting device according to the invention.

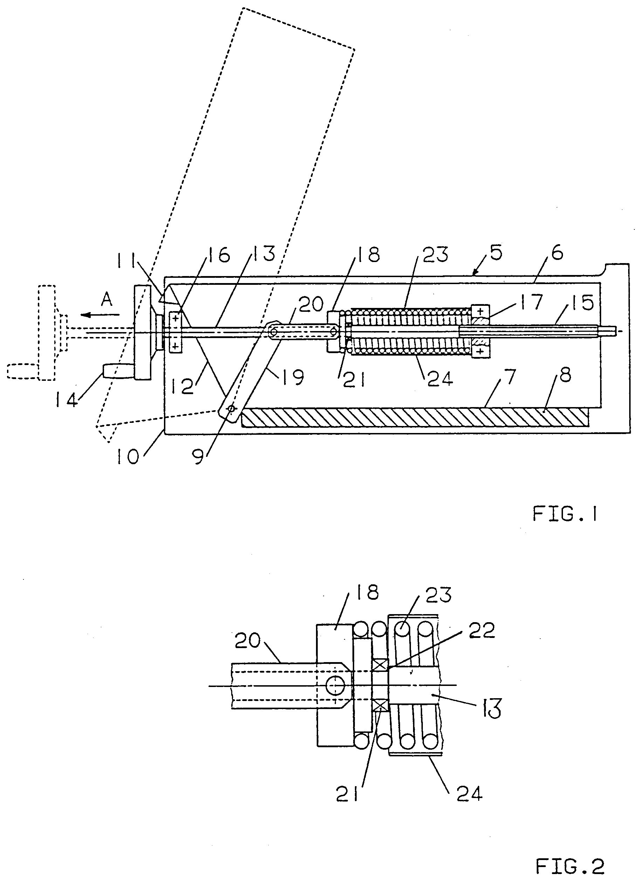

Figures 1 and 2 schematically illustrate an appliance 5 for cooking food, such as a braising pan or the like, which is provided with the pan tilting device according to the invention. As usual, such an appliance comprises a box-like pan 6 in the shape of a parallelepiped for containing the food to be cooked, electrical heating elements 8 or at least a gas burner (not shown) being provided under the bottom wall 7 of said pan, which is further provided in its front lower portion with a rotation axis 9 that is pivotally mounted in a metal support framework 10 situated under the pan.

In such a way, said pan can be displaced through the tilting device, which will be described further on, from a horizontal position as can be seen in Figure 1, in which the food contained in the pan can be cooked, to an inclined, forward tilted position with respect to said metal framework 10, by causing the same pan to revolve about its rotation axis 9 once the food contained therein are cooked, ie. a position in which said cooked food is unloaded from said cooking pan through an outlet spout 11 provided in the upper portion of the inclined front wall 12 of the same pan, and in which said pan can in this way be conveniently cleaned in view of its further use for cooking purposes.

The device provided to tilt the pan 6 according to the present invention is essentially formed by an extended cylindrical shaft 13 provided with an operating hand-wheel 14 at one of its ends and a threaded portion 15 at its other end, said cylindrical shaft 13 being supported horizontally and laterally with respect to the metal framework 10 by means of a cylindrical bush 16 and a female-thread nut screw 17, in which the threaded portion 15 of said cylindrical shaft 13 engages, said bush 16 and nut screw 17 being fastened to said metal framework in a mutually spaced position.

Said tilting device further comprises another cyclindrical bush 18 in a position located between the afore cited bush 16 and nut screw 17, said further cylindrical bush 18 being freely slidable lengthwise along the cylindrical shaft 13 and being further connected mechanically with the pan 6 through two levers 19 and 20 that are linked with each other and pivotally connected at their free ends with the rotation axis 9 and the central portion of the cylindrical bush 18, respectively, only one of said levers, ie. the lever 19, being further connected with the pan 6.

In particular, the cylindrical bush 18 is capable of sliding lengthwise along the cylindrical shaft 13 and is fixed to a thrust bearing 21 that abuts against a shoulder 22 provided on said shaft and formed by appropriately shaping said shaft, eg. by locally giving it a greater diameter than the diameter of the portion along which the bush 18 is sliding, as illustrated in Figure 2.

In order to make said pan tilting device more effective in its operation, a compression spring 23 may further be provided so as to have it abutting with its extremities against said cylindrical bush 18 and said nut screw 17, said spring being enclosed inside a corresponding spring guide tube 24 that prevents it from deflecting sidewards.

The tilting device resulting from the afore described embodiment operates as described hereinafter.

It may be assumed that the pan 6 lies initially in the position as shown in Figure 1, in which the food can be introduced in said pan for cooking and in which said cylindrical bush 18 is caused to slide into its abutting position (on the right-hand side in Figure 1) where it is pressed by the levers 19 and 20 against the thrust bearing 21, thereby compressing the spring 23 against the nut screw 17.

In this horizontal position of the pan 6 the food can therefore be cooked through the heat released by the electric heating elements 8 (or the gas burner, if provided) and, at the end of such a cooking process, the pan 6 is then displaced into its tilted position in view of performing the afore described tasks. In particular, this tilting operation is performed by manually rotating the hand-wheel 14 and, as a consequence, the cylindrical shaft 13 in such a direction of rotation as to bring about, owing to the way in which said threaded portion 15 of said cylindrical shaft engages with said nut screw 17, the lengthwise displacement of said threaded portion and, as a consequence, also of said shaft 13 in the direction indicated by the arrow A, thereby creating a condition in which the shoulder 22 compresses the thrust bearing 21 and the cylindrical bush 18 and, therefore, causes said cylindrical bush 18 to progressively slide along the shaft 13 in the same direction indicated by the arrow A, said bush therefore acting so as to displace both levers 19 and 20 in the same afore mentioned direction, and this displacement of said levers, owing to the fact that the lever 19 is fixed to the pan 6, causing the pan 6 to be progressively raised and tilted in a forward direction with respect to the metal framework 10.

When the cylindrical bush 18 is in this way displaced to its front end-of-stroke position, in which the hand-wheel 14 finds itself fully extracted in front of the metal framework 10 (as indicated by the dashed lines in Figure 1), the pan 6 is fully tilted and, therefore, the cooked food can be unloaded from the same pan, which can furthermore be now conveniently cleaned in a traditional way.

In this way, owing to said forward displacement of the hand-wheel 14 in front of the metal framework 10 of the appliance, any contact of the same hand-wheel 14 and the side of the pan 6 is avoided when the pan is being tilted, whereas no need arises to arrange the hand-wheel in a fixed, appropriately spaced position frontally with respect to the pan itself.

The pan tilting device made according to the afore described embodiment enables the pan of the afore mentioned kind of cooking vessels and appliances to be tilted in a manner which is simple, convenient and quick to perform, and, owing to the fact that such a pan is solely tilted on the front side of the related support framework in such a way that the same pan is completely lifted off said support framework, it also enables zones and spots situated between the pan and the support framework to be conveniently reached to clean them from food spillages and incrustations. For the same reasons, it furthermore enables frameworks, and therefore appliances, to be built to very compact overall sizes for reduced encumbrance, which thing of course leads to considerable material savings in manufacturing them and creates the possibility of valuably using the entire space available underneath the pan for storing containers, carts, etc., or for creating compartments of various kind for different purposes.

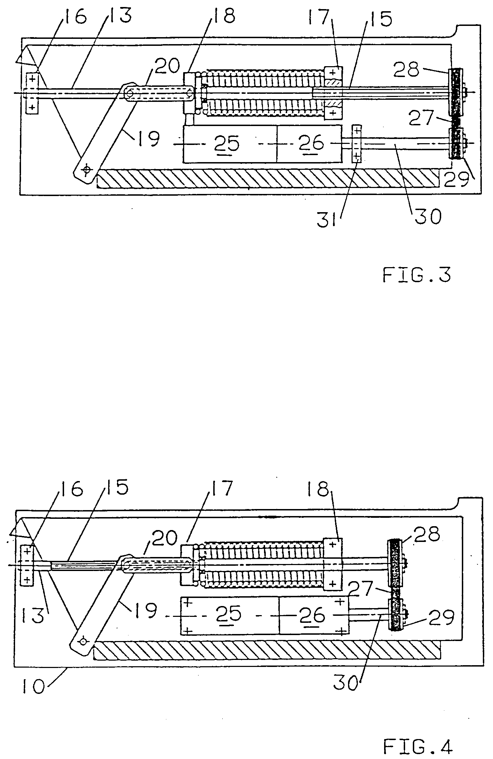

Referring now to Figure 3, it can be seen that a further possible embodiment of the afore described pan tilting device is illustrated there. It can be noticed that, in this case, said pan tilting device, besides comprising the same constructive components or building blocks as mentioned previously (which are therefore referred to with the same numerals), is further provided with an electric motor (25) which is fixedly or integrally connected with the cylindrical bush 18 and rotatably drives the cylindrical shaft 13 through a reduction gear unit 26 of a *per se* known type, as well as through a drive belt 27 which wound about two corresponding pulleys 28, 29 that are shrink-fitted onto the threaded portion 15 of the cylindrical shaft 13 and the shaft 30 of the reduction gear unit 26, respectively, said shaft 30 being freely rotating in a bush 31 that is integral with the framework 10. Also in this case said cylindrical shaft 13 is moved forward in front of the framework 10, along with the motor-reduction gear unit-pulleys assembly.

Figure 4 finally illustrates a further possible embodiment of the pan tilting device according to the invention, where it can be noticed that even in this case the cylindrical shaft 13 is rotatably driven through the motor 25, the reduction gear unit 26, the pulleys 28 and 29, and the drive belt 27, all these components being fixed to the support framework 10, whereas the cylindrical bush 18 and the nut screw 17 are respectively fixed to the framework 10, in order to support the terminal portion of the shaft 13, and engaging with the threaded portion 15 of the same shaft 13, said threaded portion being in this case provided near the fixed bush 16.

In this way, the action of raising and tilting the pan 6 is achieved owing to the fact that said threaded portion 15 of the shaft 13 engages with said nut screw 17, which is thereby caused to displace along the shaft 13 so as to bring about the same movements of these components to the same purposes as mentioned above.

**Claims**

1. Pan tilting device for food cooking appliances, in particular braising pans and the like, comprising a pan for containing the food to be cooked which is pivotally hinged on to a metal support framework and tiltable by lifting it on the front side of said support framework through at least a system, including a threaded cylindrical shaft and a nut screw, supported by said framework and suitable to be rotatably driven, characterized in that it comprises driving means (19, 20, 18; 26) co-operating with said cylindrical shaft (13) and said pan (6) and arranged to raise the pan and tilt it during the rotation of said shaft (13).

2. Pan tilting device according to claim 1, characterized in that said driving means comprise a first and a second lever (19, 20) and at least a moving element (18; 17) slidable along said shaft (13), and are arranged laterally with respect to said pan (6), said first and said second lever (19, 20) being pivotally linked with each other and pivotally mounted with their free ends on to the rotation axis (9) of said pan (6) and the central portion of said moving element (18, 17), respectively.

3. Pan tilting device according to claim 2, characterized in that said first lever (19) is fixed to said pan (6).

4. Pan tilting device according to claim 2, characterized in that it comprises at least a compression spring (23) inserted between said moving element (18; 17) and a corresponding support element (17; 18) sustained by said framework (10) in correspondence of a terminal threaded portion (15) of said cylindrical shaft (13), said compression spring (23) being enclosed in a corresponding spring guide tube (24).

5. Pan tilting device according to claim 2, characterized in that said moving element comprises a cylindrical bush (18).

6. Pan tilting device according to claim 5, characterized in that said cylindrical shaft (13) is arranged to be rotatably driven manually by means of a hand-wheel (14) attached thereon at the front-side end of the shaft.

7. Pan tilting device according to claim 5, characterized in that said cylindrical shaft (13) is arranged to be rotatably driven by at least an electric motor (25) through a reduction gear unit (26) and a drive belt (27), said drive belt (27) being wound about two corresponding pulleys (28, 29) that are shrink-fitted on to said shaft (13) and the shaft (30) of said reduction gear unit (26), respectively.

8. Pan tilting device according to claim 7, characterized in that said moving element comprises said nut screw (17) which is adapted to slidingly engage the threaded portion (15) of said shaft (13).

FIG.1

FIG.2

FIG.3

FIG.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-3 411 564 (WINTERHOFF)<br>* the whole document * | 1-3,5-8 | A47J27/14 |
| A | | 4 | |
| | --- | | |
| X | US-A-3 964 378 (DUNKELMAN)<br>* column 2, line 26 - column 5, line 16; figures * | 1 | |
| A | | 2,3,5,6,8 | |
| | --- | | |
| X | US-A-3 797 377 (LOTTER ET AL)<br>* column 2, line 8 - column 4, line 20; figures * | 1 | |
| A | | 2-3,5-8 | |
| | --- | | |
| X | US-A-3 068 912 (SHAW)<br>* column 2, line 6 - column 4, line 11; figures * | 1 | |
| A | | 2,3,5-8 | |
| | --- | | |
| A | DE-A-2 309 673 (SENKINGWERK GMBH KG)<br>--- | 1,4,6 | TECHNICAL FIELDS SEARCHED (Int. Cl.5) |
| A | GB-A-2 199 509 (CHIN YAN HSIEH)<br>--- | | A47J |
| A | FR-A-1 220 449 (ROBERT) | | |

-----

The present search report has been drawn up for all claims

| Place of search | Date of completion of the search | Examiner |
|---|---|---|
| THE HAGUE | 18 MAY 1992 | VISTISEN L. |